# EUROPÄISCHE PATENTSCHRIFT

(11) **EP 1 188 263 B1**
(45) Veröffentlichungstag und Bekanntmachung des Hinweises auf die Patenterteilung: **25.06.2003**
(21) Anmeldenummer: 00929286.3
(22) Anmeldetag: 14.04.2000
(51) Int. Cl.: H04B 10/135

(54) **EINRICHTUNG ZUR DETEKTION VON POLARISATIONSMODENDISPERSION**
DEVICE FOR DETECTING POLARIZATION MODE DISPERSIONS
DISPOSITIF DE DETECTION DE DISPERSION DE POLARISATION

(30) Priorität: 28.06.1999 DE 19929673
(43) Veröffentlichungstag der Anmeldung: 20.03.2002
(73) Patentinhaber: SIEMENS AKTIENGESELLSCHAFT, 80333 München (DE)
(72) Erfinder: NOE, Reinhold, D-33100 Paderborn (DE)
(86) Internationale Anmeldenummer: DE0001175
(87) Internationale Veröffentlichungsnummer: WO01001612

(56) Entgegenhaltungen:
- EP-A- 0 863 626
- EP-A- 0 909 045
- DE-A- 19 538 310
- SCHLUMP ET AL: "Electronic equalisation of PMD and chromatic dispersion induced distorsion after 100 km standard fibre at 10 Gbit/s" PROCEEDINGS OF THE EUROPEAN CONFERENCE ON OPTICAL COMMUNICATION, 20. September 1998 (1998-09-20), XP002126317

## Beschreibung

Die Erfindung betrifft eine Einrichtung zur Detektion von Polarisationsmodendispersion eines optischen Datensignals gemäß dem Oberbegriff des Patentanspruches 1.

In der optischen Übertragungstechnik werden lange Lichtwellenleiter-Übertragungsstrecken eingesetzt. Die Lichtweilenleiter sind herstellungsbedingt nicht vollständig isotrop, sondern schwach doppelbrechend. Wegen der langen Übertragungsstrecke ergibt sich eine frequenzabhängige Polarisationstransformation - Polarisationsmodendispersion oder Polarisationsdispersion genannt, abgekürzt PMD. Diese führt durch Änderung der Polarisation des optischen Signals als Funktion der optischen Frequenz und - verbunden damit - unterschiedlichen frequenzabhängigen Laufzeiten zur Verbreiterung gesendeter Impulse, wodurch empfangsseitig deren Erkennbarkeit reduziert und dadurch die übertragene Datenrate begrenzt wird. Als "principal states-of-polarization", im folgenden PSP oder Hauptpolarisationen, werden diejenigen beiden zueinander orthogonalen Polarisationen genannt, die sich bei Änderung der optischen Frequenz in erster Näherung nicht ändern. In polarisationserhaltenden Lichtwellenleitern fallen die Hauptpolarisationen mit den Hauptachsen zusammen, sind also horizontal und vertikal. Im allgemeinen sind die Hauptpolarisationen aber beliebige orthogonale Paare elliptischer Polarisationen. Die Hauptpolarisationen besitzen verschiedene Gruppenlaufzeiten, deren Differenz als "differential group delay", im folgenden DGD oder differentielle Gruppenlaufzeit, bezeichnet wird. Wird ein optisches Signal mit einer Hauptpolarisation übertragen, so findet in Näherung erster Ordnung keine Impulsverbreiterung statt. Wird es mit einer Polarisation übertragen, die bei Aufteilung nach den beiden Hauptpolarisationen dort gleichen Leistungsanteilen entspricht, kommt es zu maximaler Impulsverbreiterung, weil zwei gleich starke Impulse mit Laufzeitunterschieden der Größe DGD überlagert werden. Ändern sich die Hauptpolarisationen als Funktion der optischen Frequenz, so wird bei eingangsseitiger Verwendung einer Hauptpolarisation, die einer bestimmten Frequenz entspricht, die Ausgangspolarisation als Funktion der Frequenz aber trotzdem ändern, aber eben erst in höherer als erster Ordnung. Dies bezeichnet man als PMD höherer Ordnung. Im allgemeinen tritt PMD höherer Ordnung auf, wobei aber PMD erster Ordnung durch seine Auswirkungen dominiert und deshalb bevorzugt kompensiert werden muß.
Erschwerend kommt hinzu, daß sich durch Temperaturänderung oder mechanische Beanspruchung das Übertragungsverhalten der Strecke und somit auch die PMD ändert. Deshalb werden adaptive PMD-Kompensatoren eingesetzt, die in den Übertragungspfad eingefügt werden. Zu deren Ansteuerung müssen im optischen Empfänger PMD-Verzerrungen detektiert werden. Der Kompensator läßt sich dann beispielsweise mit einem Gradientenalgorithmus optimal einstellen.

In Electronic Letters 17. Februar 1994, Band 30, Nr. 4, Seiten 348 bis 349 wird ein Bandpaßfilter zur Filterung eines Datensignals eingesetzt, dessen PMD zu detektieren ist. Ein Leistungsdetektor am Filterausgang liefert ein Signal, das desto höher ist, je geringer die PMD-Verzerrungen sind. In Electron. Lett. 34(1998)23, Seiten 2258 bis 2259 wird eine Kombination mehrerer Bandpaßfilter mit anschließenden Leistungsdetektoren verwendet, wobei statt Einzelsignalen auch eine Linearkombination der Signale verwendet werden kann. Durch Bandpaßfilter unterschiedlicher Mittenfrequenzen wird gleichzeitig die Detektierbarkeit auch größerer PMD-Verzerrungen möglich, welche z.B. eine Bitdauer des Signals überschreiten. Bandpaßfilter sind aber schlecht für die monolithische Integration, beispielsweise in Si oder SiGe geeignet. Unvermeidliche Gruppenlaufzeitverzerrungen in den Bandpaßfiltern führen außerdem dazu, daß keine optimale PMD-Detektion und somit Entzerrung möglich ist.

In Proceedings OEC 94, 14e-12, Seiten 258 bis 259, Makuhari Messe, Japan 1994 wird ein anderes Verfahren verwendet, bei dem die Leistung des Differenzsignals zwischen Entscheiderausgang und Entscheidereingang ausgewertet wird. Insbesondere bei starken PMD-Verzerrungen, in denen die DGD die Bitdauer überschreitet, kann es aber zu falschen Entscheidungen kommen, so daß das gewonnene Signal in solchen Fällen ein ungeeignetes Kriterium für das Vorliegen von PMD-Verzerrungen ist.

Die Aufgabe der Erfindung besteht darin, einen zuverlässigen Detektor auch für größere Werte der differentiellen Gruppenlaufzeit anzugeben, welcher auf einfache Weise integriert werden kann und anders als Bandpaßfilter keinen intrinischen Verzerrungen durch Gruppenlaufzeitverzerrungen unterworfen ist.

Die Aufgabe wird durch eine Einrichtung zur Detektion von Polarisationsmodendispersion gemäß Anspruch 1 gelöst.

Vorteilhafte Weiterbildungen der Erfindung sind in den Unteransprüchen angegeben.

Erfindungsgemäß werden Exklusiv-Oder-Gatter (EXOR) oder Multiplizierer eingesetzt, mit deren Hilfe wesentliche Teile der Autokorrelationsfunktion des im elektrischen Teil eines optischen Empfängers vorliegenden Basisbandsignals bestimmt werden. Der besondere Vorteil der Erfindung liegt darin, daß EXOR-Gatter einfach monolithisch integriert werden können.

Mit EXOR-Gattern, welche durch Laufzeitleitungen getrennt sind, ergeben sich die Autokorrelationsfunktionswerte bei unterschiedlichen Zeitverzögerungen.

In einem vorteilhaften Ausführungsbeispiel werden zwei in entgegengesetzter Richtung zu durchlaufende Laufzeitleitungen eingesetzt, welche in besonders platzsparender Weise implementiert werden können und außerdem mindestens näherungsweise die Leitungsverluste ausgleichen.

Ausführungsbeispiele der Erfindung werden anhand von Figuren beschrieben.

Es zeigen:
- Figur 1: eine erfindungsgemäße Einrichtung zur PMDDetektion, ergänzt durch PMD-Kompensator und weitere Baugruppen,
- Figur 2: eine schlechte und eine gute abgetastete Autokorrelationsfunktion,
- Figur 3: ein weiteres Ausführungsbeispiel einer Einrichtung zur PMD-Detektion,
- Figur 4: eine Variante von Laufzeitleitungen,
- Figur 5: eine weitere Variante einer Laufzeitleitung und
- Figur 6: einen an einen Regler angeschlossenen Regenerator.

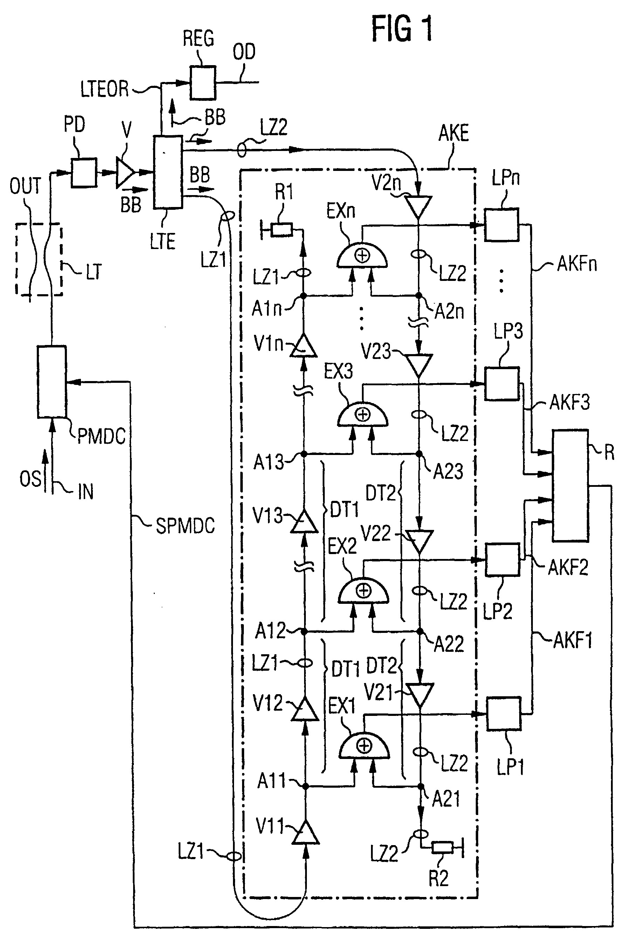

**Figur 1** zeigt ein System zur optischen PMD-Kompensation. Es besitzt einen optischen Eingang IN und einen optischen Ausgang OUT. Eine optische Welle OS durchläuft vom Eingang IN kommend zunächst einen einstellbaren optischen PMD-Kompensator PMDC, dann einen Leistungsteiler LT. Ein Ausgang des Leistungsteilers bildet den optischen Ausgang OUT des Systems, der andere steuert eine Photodiode PD an. Nach elektrischer Verstärkung in Verstärker V wird das Basisbandsignal BB einem elektrischen Leistungsteiler LTE zugeführt.

Die Ausgänge des elektrischen Leistungsteilers werden zwei angezapften Laufzeitleitungen LZ1, LZ2 zugeführt. Die Enden der Laufzeitleitungen sind mit Abschlußwiderständen R1, R2 entsprechend dem Wellenwiderstand versehen. Eine Anzapfung A1j (j = 1 ... n) der Leitung LZ1 ist jeweils einem, eine Anzapfung A2j (j = 1 ... n) der Leitung LZ2 ist jeweils dem anderen Eingang eines EXOR-Gatters EXj (j = 1 ... n) zugeführt.

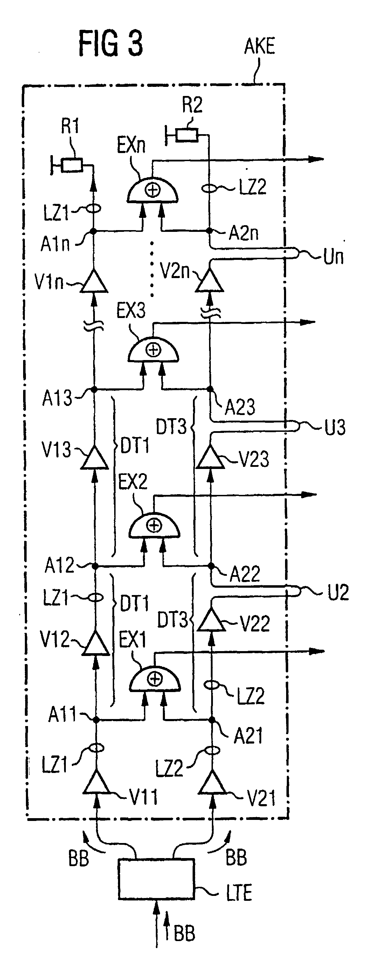

Statt EXOR-Gattern eignen sich auch alle beliebigen anderen Multipliziererschaltungen. Besonders als EXOR-Gatter/Multiplizierer geeignet sind Gilbert-Multiplizier. Eine geeignete Schaltung, hier mit Feldeffekttransistoren, ist beispielsweise in Electronics Letters, 15. August 1991, Band 27, No. 17, Seiten 1529 bis 1532 dargestellt, und zwar in der dortigen Fig. 3.

Die Anzapfungen sind auf einer der Leitungen (LZ1) nach steigendem, auf der anderen Leitung (LZ2) nach fallendem Index j geordnet. Dies führt dazu, daß die Laufzeitdifferenz zwischen den Signalen an den Eingängen eines EXOR-Gatters EXj sich mit steigendem Index j monoton ändert. Sind die Leitungslängen zwischen allen benachbarten Anzapfungen jeweils einer Leitung gleich groß, so ergeben sich äquidistante, sich gemäß Index j monoton ändernden Laufzeitdifferenzen. An die Ausgänge der EXOR-Gatter EXj sind jeweils Tiefpaßfilter LPj (j = 1 ... n) angeschlossen. Statt Tiefpaßfiltern eignen sich auch andere zur Mittelwertbildung verwendbare Schaltungen wie z.B. Integratoren, welche über eine definierte Zeitdauer integrieren. Solche werden auch als "Integrate-and-Dump"-Schaltungen bezeichnet. Die Ausgangssignale der Tiefpaßfilter geben die bei verschiedenen Laufzeitdifferenzen gemessenen Werte der Autokorrelationsfunktion des elektrischen Signals BB an.

Um die Verluste an den Anzapfungen A1j, A2j auszugleichen, Mehrfachreflexionen auf den Laufzeitleitungen LZ1, LZ2 zu unterdrücken und eine größere Signallaufzeit bei gegebenen Ausmaßen zu erzielen, können in die Laufzeitleitungen LZ1, LZ2 Pufferverstärker V1j, V2j (j = 1 ... n) eingefügt werden. Sie sind jedoch nicht unbedingt erforderlich.

Da symmetrische Schaltungstechnik mit differentiellen Eingängen und Gegentakt-Ausgängen zahlreiche Vorteile bietet, ist es günstig, diese auch hier anzuwenden. Beispielsweise können Verstärker V, Leistungsteiler LTE, Laufzeitleitungen LZ1, LZ2, Pufferverstärker V1k, V2k, Anzapfungen A1j, A2j, Abschlußwiderstände R1, R2, EXOR-Gatter EXj und Tiefpaßfilter LPj symmetrisch ausgelegt sein. Wie dies für z.B. ein EXOR-Gatter erfolgt, ist in der letztgenannten Literaturstelle beschrieben.

EXOR-Gatter EXj und zumindest Teile der Laufzeitleitungen LZ1, LZ2 einschließlich Anzapfungen A1j, A2j und Abschlußwiderständen R1, R2 sowie, falls vorhanden, Pufferverstärker V1k, V2k bilden eine Autokorrelationseinheit AKE. Diese kann beispielsweise auch den Rest der Laufzeitleitungen LZ1, LZ2, den elektrischen Leistungsteiler LTE und den Verstärker V umfassen. Eine Autokorrelationseinheit AKE1 läßt sich platzsparend auf einem Halbleiterchip monolithisch integrieren, z.B. in SiGe, GaAs, oder InP.

Durch die Anzapfungen entstehen in der Praxis Verluste auf den Laufzeitleitungen LZ1, LZ2. Da die Eingangssignale aller EXOR-Gatter aber in Summe gleich viele Anzapfungen durchlaufen, d.h. bei Addition der durchlaufenen Anzapfungen auf Leitung LZ1 und der durchlaufenen Anzapfungen auf LZ2, und bei geeigneter Auslegung auch in Summe gleich lange Leitungsstükke durchlaufen, ist das Produkt der Dämpfungsfaktoren, die diese Eingangssignale erfahren, konstant. Dies gilt auch bei fehlenden Pufferverstärkern V1k, V2k. Dies führt in vorteilhafter Weise dazu, daß die Ausgangssignale der verschiedenen EXOR-Gatter EXj mit wenigstens näherungsweise demselben Proportionalitätsfaktor proportional zum der jeweiligen Verzögerung entsprechenden Wert der Autokorrelationsfunktion entsprechen.

Im Ausführungsbeispiel der Figur 1 seien die Signallaufzeit zwischen den Ausgängen des elektrischen Leistungsteilers LTE und den Anzapfungen A11 bzw. A21 identisch. Auf diese Weise ergibt sich am Ausgang des Tiefpaßfilters LP1 der Wert AKF1 der Autokorrelationsfunktion des Basisbandsignals BB bei Verzögerung Null. Zwischen benachbarten Anzapfungspunkten A1k und A1(k+1) (k = 1 ... n-1) seien die Signallaufzeiten identisch und besitzen den Wert DT1. Zwischen jeweils benachbarten Anzapfungspunkten A2(k+1) und A2k (k = 1 ... n-1) seien die Signallaufzeiten identisch und besitzen den Wert DT2. Da die Laufzeitleitungen LZ1, LZ2 im Bereich der EXOR-Gatter in entgegengesetzten Richtungen durchlaufen werden, ergibt sich an den Ausgängen der übrigen Tiefpaßfilter LP2 ... LPn jeweils der Wert AKF2, AKF3, ... AKFn der Autokorrelationsfunktion des Basisbandsignals BB bei Verzögerungen DT, 2*DT, ... , (n-1)*DT, wobei gilt DT = DT1+DT2. Zur Minimierung der Chipfläche ist es vorteilhaft, DT1 = DT2 zu wählen. Es ist weiterhin günstig, DT gleich einer oder kürzer als eine Symboldauer T des Basisbandsignals BB zu wählen. Im Fall der meist verwendeten Binärsignale ist eine Symboldauer T gleich einer Bitdauer. Da die Autokorrelationsfunktion eines reellen Signals gerade Symmetrie besitzt, kann auf die Messung von Werten der Autokorrelationsfunktion mit entgegengesetzten Verzögerungen verzichtet werden. Die maximale Verzögerung (n-1)*DT sollte nach Möglichkeit wenigstens ebenso groß wie die Summe von einer durch PMD verursachten differentiellen Gruppenlaufzeit der optischen Übertragungsstrecke und der vom PMD-Kompensator PMDC erzeugten differentiellen Gruppenlaufzeit sein.

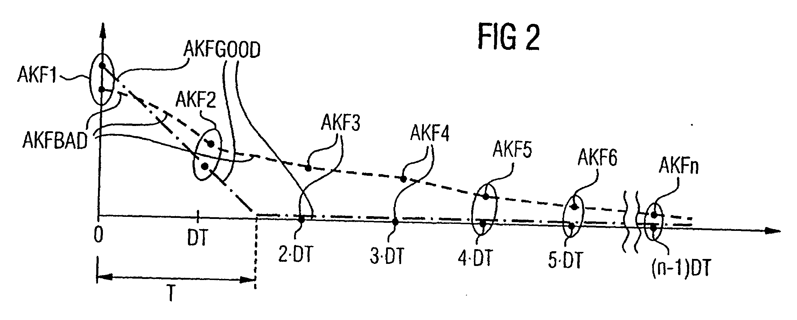

Die Ausgänge der Tiefpaßfilter LPj sind einem Regler R zugeführt. Hier liegt also eine durch Werte AKF1 ... AKFn abgetastete Autokorrelationsfunktion AKF vor. Wenn PMD vorliegt und nicht entzerrt ist, ist der Wert AKF1 oft geringer als der maximal mögliche Wert und die Werte AKF2 ... AKFn sind auch dann, wenn sie Verzögerungen DT ... (n-1)*DT größer als einer Symboldauer T des Basisbandsignals entsprechen, von Null verschieden. Eine solche, schlechte Autokorrelationsfunktion AKFBAD zeigt **Figur 2**. Gezeigt ist nur eine Hälfte der Autokorrelationsfunktion, da diese ja symmetrisch ist, so daß sich Messung der anderen Hälfte erübrigt.

Der Regler R regelt die Steuersignale SPMDC des PMD-Kompensators PMDC so ein, daß die Autokorrelationsfunktion wenigstens näherungsweise gleich der Autokorrelationsfunktion des unverzerrten Basisbandsignals ist. Im Fall von NRZ-Signalen ist dies ein um Verzögerung Null zentrierter Dreiecksimpuls, der bei einer Verzögerung von einer Bitdauer T den Wert Null erreicht und für größere Verzögerungen dort verbleibt. Auch eine solche gute Autokorrelationsfunktion AKFGOOD zeigt Figur 2. In diesem Fall ist der Wert AKF1 maximal und die Werte AKF2 ... AKFn sind dann, wenn die Verzögerungen DT ... (n-1)*DT mindestens so groß sind wie eine Symboldauer T des Basisbandsignals, wenigstens näherungsweise gleich Null. In Figur 2 gilt dies für die Werte 2*DT ... (n-1)*DT. In diesem Fall wird PMD ideal entzerrt. Am optischen Ausgang OUT erscheint deshalb ein ideal entzerrtes optisches Signal.

Der optische Leistungsteiler LT kann auch entfallen, so daß der PMD-Kompensator PMDC ausgangsseitig direkt mit der Photodiode PD verbunden ist. In diesem Fall soll der elektrische Leistungsteiler LTE, wie in Figur 1 gezeigt, einen weiteren elektrischen Ausgang LTEOR aufweisen. An diesem elektrischen Ausgang LTEOR wird ein elektrischer Datenregenerator (sogenannter 3R-Regenerator) REG angeschlossen. An seinem Ausgang OD steht ein regeneriertes Datensignal zur Verfügung, welches wenigstens näherungsweise keine Bitfehler durch PMD aufweist.

**Figur 3** zeigt ein weiteres Ausführungsbeispiel der Einrichtung zur PMD-Detektion. Gezeigt ist hier lediglich die Autokorrelationseinheit AKE der Figur 1 und ein Leistungsteiler LTE. In Figur 3 sind die Signalflußrichtungen der Laufzeitleitungen LZ1, LZ2 entlang der EXOR-Gatter nicht wie in Figur 1 entgegengesetzt, sondern gleichgerichtet. Dies ist auch aus der entgegengesetzten Plazierung des Abschlußwiderstands R2 und der entgegengesetzten Ausrichtung der Pufferverstärker V2j ersichtlich. Wie in Figur 1 sind Pufferverstärker nicht unbedingt notwendig bzw. können z.B. nur an manchen Stellen vorgesehen werden.

Zeitverzögerung DT1 seien in Figur 3 ebenso wie in Figur 1 definiert. Zwischen jeweils benachbarten Anzapfungspunkten A2k und A2(k+1) (k = 1 ... n-1) der Figur 3 seien die Signallaufzeiten identisch und besitzen den Wert DT3. Die Laufzeitdifferenzen zwischen den Eingängen aufeinanderfolgender Korrelatoren sind daher 0, DT, 2*DT ... (n-1)*DT, wobei DT hier den Wert DT = DT1 - DT3 besitzt. Um unterschiedliche DT1, DT3 zu erzielen, sind Umwegleitungen Um (m = 2 ... n) vorgesehen.

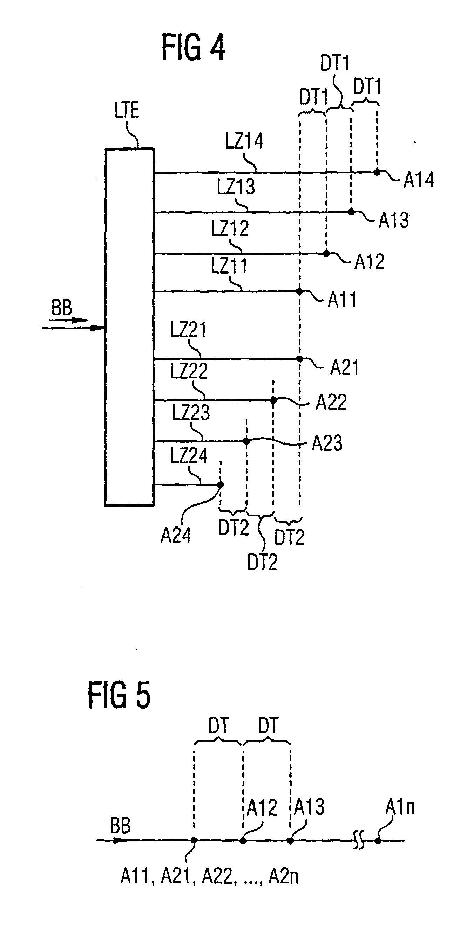

Statt angezapfter Laufzeitleitungen LZ1, LZ2 können auch mehrere unterschiedlich lange Laufzeitleitungen LZ1j, LZ2j (j = 1 ... n) verwendet werden. Dazu muß der Leistungsteiler LTE entsprechend viele Ausgänge aufweisen. Ein geeignetes Ausführungsbeispiel mit n=4 ist in **Figur 4** skizziert. Die Laufzeitleitungen LZ1j, LZ2j enden in denjenigen Punkten A1j, A2j, welche mit den EXOR-Gatter-Eingängen verbunden sind und in Figuren 1 und 2 die Anzapfungspunkte waren. Die Laufzeitdifferenzen zwischen den Punktpaaren (A11, A21), (A12, A22), (A13, A23), (A14, A24) sind 0, DT, 2*DT bzw. 3*DT mit DT = DT1 + DT2.

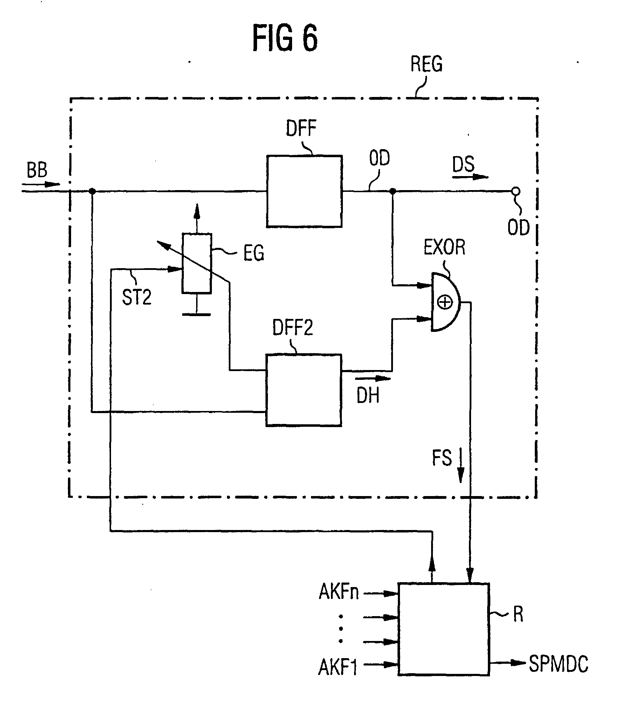

In **Figur 5** ist ein Teil eines Ausführungsbeispiel mit nur einer Laufzeitleitung LZ1 gezeichnet. Die Punkte A1j, welche mit jeweils einem EXOR-Gatter-Eingang verbunden sind, sind entlang der Laufzeitleitung LZ1 aufgereiht. Die Punkte A2j, welche mit jeweils dem anderen EXOR-Gatter-Eingang verbunden sind, fallen alle zusammen und sind mit dem Punkt A11 identisch. Auf diese Weise werden Laufzeitdifferenzen 0, DT, 2*DT ... (n-1)*DT zwischen den EXOR-Gatter-Eingängen erzielt.

Um eine optimal niedrige Bitfehlerquote zu erreichen, ist es zweckmäßig, ein Maß dieser Bitfehlerquote dem Regler R zugänglich zu machen. Dies ist auf einfache Weise möglich, wenn ein elektrischer Regenerator REG vorgesehen ist. Auch in Fällen, in denen Leistungsteiler LT und optischer Ausgang OUT des entzerrten optischen Signals vorhanden sind, kann es deshalb zweckmäßig sein, Regenerator REG vorzusehen. In **Figur 6** ist der Regenerators REG gezeichnet. Eine Taktrückgewinnung ist i.a. notwendig, ist hier aus Gründen der Übersichtlichkeit aber nicht eingezeichnet. Das regenerierte Datensignal DS erscheint am Ausgang OD, der auch Ausgang eines D-Flip-Flop DFF ist, welchem das Basisbandsignal BB eingangsseitig zugeführt wird. Einem zweiten Entscheider (D-Flip-Flop) DFF2 wird das Basisbandsignal ebenfalls zugeführt.
In diesem Ausführungsbeispiel ist die Schwelle des Entscheiders über eine Einstelleinrichtung EG so weit verstellbar, daß dieser bereits ein fehlerbehaftetes Datenhilfssignal DH liefert, wenn der erste Entscheider DFF noch ein im wesentlichen fehlerfreies Datensignal DS abgibt. Die Ausgangssignale werden in einem Exklusiv-Oder-Gatter EXOR miteinander verglichen, und das so gewonnene Fehlersignal FS wird ebenfalls dem Regler R zur Steuerung des PMD-Kompensators PMDC zugeführt. Durch Verschiebung der Schwelle des zweiten Entscheiders mit einer Einstelleinrichtung EG, welche über ein Steuersignal ST2 vom Regler R gesteuert wird, wird ständig ein Maß dafür entwickelt, wie gut die Signalqualität im Hinblick auf eine erreichbare Bitfehlerquote ist. Je geringer die Fehlerrate des Datenhilfssignals bei einer Verschiebung der Schwelle aus dem Optimum ist, desto besser ist die Signalqualität. Im Groben werden ein Maximalwert der Autokorrelationsfunktion AKF1 bei Verzögerung Null und Nullwerte der Autokorrelationsfunktion für Verzögerungen, welche größer als eine Symboldauer T sind, auch minimale Bitfehlerquote ergeben. Eine genauere Bewertung, die zu einer niedrigeren Bitfehlerrate des Entscheiders DFF führt, ergibt sich hingegen bei Verwendung des Fehlersignals FS. Da Abweichungen des Datenhilfssignals DH vom Datensignal DS aber stochastisch auftreten, ist eine relativ lange Meß- oder Mittelungszeit des Fehlersignals FS erforderlich, um einen besonders gutes Signal-Rausch-Verhältnis und damit eine optimale Kompensation zu gewinnen. Die mit Hilfe des zweiten Entscheiders gewonnene zusätzliche Information wird dazu eingesetzt, den Regelalgorithmus des Reglers R, welcher die Einstellung des PMD-Kompensators PMDC mit Hilfe der Autokorrelationsfunktionsmeßwerte AKF1, AKF2, ... AKFn vornimmt, adaptiv zu modifizieren. Beispielsweise könnte ein leicht negativer Wert AKF3 günstiger sein als der Wert Null. Diese adaptive Betriebsform erscheint besonders günstig, um Exemplarstreuungen, Temperaturschwankungen, Auftreten nicht linearer Effekte usw. tolerierbar zu machen. Der große Vorteil dieser Ausführungsformen besteht darin, daß durch die gemessenen Werte der Autokorrelationsfunktion bereits eine rasche PMD-Kompensation möglich ist und für die Feineinstellung und die Einstellung der Übertragungsfunktion des Filters ausreichend Zeit zur Verfügung steht.

Insbesondere in Fällen, in denen es auf ein schnelles Einstellen des PMD-Kompensators PMDC nicht ankommt, ist aber auch die Verwendung nur eines Fehlersignals FS möglich. Dabei können elektrischer Leistungsteiler LTE und Autokorrelationseinheit AKE und Tiefpaßfilter LPj entfallen.

## Patentansprüche

1. Einrichtung zur Detektion von Polarisationsmodendispersion eines optischen Datensignals (OS) durch Auswertung eines elektrischen Basisbandsignals (BB),
**dadurch gekennzeichnet,**
**daß** mindestens ein Multiplizierer (EXj; j = 1 ... n) vorgesehen ist, der durch Multiplikation eines Werts des Basisbandsignals (BB) mit einem verzögerbaren Wert des Basisbandsignals und anschließende Mittelung in einer Mittelungseinrichtung (LPj; j = 1 ... n) einen Wert (AKFj; j = 1 ... n) der Autokorrelationsfunktion (AKF) des Basisbandsignals (BB) berechnet.

2. Einrichtung nach Anspruch 1,
**dadurch gekennzeichnet,**
**daß** eine Laufzeitleitung (LZ1, LZ2) mit Anzapfungen (A1j, A2j; j = 1 ... n) vorgesehen ist, daß Anzapfungen (A1j bzw. A2j) mit verschiedenen Verzögerungen (0, DT, 2*DT, ... (n-1)*DT) jeweils mit den Eingängen eines Multiplizierers (EXj) verbunden sind.

3. Einrichtung nach Anspruch 2,
**dadurch gekennzeichnet,**
**daß** zwei Laufzeitleitungen (LZ1, LZ2) vorgesehen sind, die in dem Bereich, in dem sie über die Eingänge von Multiplizierern (EXj) eine gegenseitige Zuordnung aufweisen, von diesem Basisbandsignal (BB) in entgegengesetzten Richtungen durchlaufen werden, so daß sich die zwischen benachbarten Multiplizierern(EXk und EX(k+1); k = 1 ... n-1) auftretenden Verzögerungen (DT1, DT2) zu einer Verzögerungsdifferenz (DT = DT1 + DT2) zwischen diesen Multiplizierern addieren.

4. Einrichtung nach Anspruch 2,
**dadurch gekennzeichnet,**
**daß** zwei Laufzeitleitungen (LZ1, LZ2) vorgesehen sind, die in dem Bereich, in dem sie über die Eingänge von Multiplizierern (EXj) eine Zuordnung aufweisen, in gleicher Richtung durchlaufen werden, so daß sich die zwischen benachbarten Multiplizierern (EXk und EX(k+1); k = 1 ... n-1) auftretenden Verzögerungen (DT1, DT3) sich zu einer Verzögerungsdifferenz (DT = DT1 - DT3) zwischen diesen Multiplizierern subtrahieren.

5. Einrichtung nach Anspruch 1,
**dadurch gekennzeichnet,**
**daß** mehrere unterschiedlich lange Laufzeitleitungen (LZ1j, LZ2j; j = 1 ... n) vorgesehen sind, an deren Enden (A1j, A2j; j = 1 ... n) die Eingänge von Multiplizierern (EXj) angeschlossen sind.

6. Einrichtung nach einem der Ansprüche 2 bis 5,
**dadurch gekennzeichnet,**
**daß** eine Umwegleitung (Um; m = 2 ... n) oder ein Pufferverstarker (V1j, V2j; j = 1 ... n) in einer Laufzeitleitung (LZ1, LZ2, LZ1j, LZ2j; j = 1 ... n) vorgesehen ist.

7. Einrichtung nach einem der Ansprüche 2 bis 6,
**dadurch gekennzeichnet,**
**daß** auftretende Verzögerungen (0, DT, 2*DT, ... (n-1)*DT) äquidistant sind mit konstanter Verzögerungsdifferenz (DT).

8. Einrichtung nach einem der Ansprüche 2 bis 7,
**dadurch gekennzeichnet,**
**daß** eine Verzögerungsdifferenz (DT) wenigstens näherungsweise gleich einer Symboldauer (T) des Basisbandsignals (BB) ist.

9. Einrichtung nach einem der vorhergehenden Ansprüche,
**dadurch gekennzeichnet,**
**daß** ein Regler (R) zur Steuerung eines PMD-Kompensators (PMDC) vorgesehen ist.

10. Einrichtung nach Anspruch 9,
**dadurch gekennzeichnet,**
**daß** der Regler (R) einen nicht verzögerten Wert (AKF1) der Autokorrelationsfunktion wenigstens näherungsweise maximiert und um mindestens eine Symboldauer (T) verzögerte Werte (AKF2, AKF3 ... AKFn) der Autokorrelationsfunktion wenigstens näherungsweise auf den Wert Null einregelt.

11. Einrichtung nach einem der vorhergehenden Ansprüche,
**dadurch gekennzeichnet,**
**daß** eine Meßanordnung (EG; DFF2; EXOR) zur Messung der Bitfehlerrate bei einem absichtlich verschlechterten Empfangssignal oder einem geänderten Schwellwert einer zweiten Entscheiderstufe (DFF2) vorgesehen ist, deren Fehlersignal (FS) über einen Regler (R) einen PMD-Kompensator (PMDC) steuert.

12. Einrichtung nach Anspruch 11,
**dadurch gekennzeichnet,**
**daß** über den Regler (R) außerdem die anzustrebenden Werte der Autokorrelationsfunktion (AKFj; j = 1 ... n) adaptiv eingestellt werden.

13. Einrichtung nach einem der vorhergehenden Ansprüche,
**dadurch gekennzeichnet,**
**daß** der Multiplizierer (EXj) ein EXOR-Gatter oder ein Gilbert-Multiplizierer ist.

## Claims

1. Device for detecting polarization mode dispersion of an optical data signal (OS) by evaluating an electrical baseband signal (BB),
**characterized**
**in that** at least one multiplier (EXj; j = 1 ... n) is provided, which calculates a value (AKFj; j = 1 ... n) of the autocorrelation function (AKF) of the baseband signal (BB) by multiplication of a value of the baseband signal (BB) by an optionally delayed value of the baseband signal and subsequent averaging in an averaging device (LPj; j = 1 ... n).

2. Device according to Claim 1,
**characterized**
**in that** a delay line (LZ1, LZ2) with taps (A1j, A2j;j = 1 ... n) is provided, in that taps (A1j and A2j) with different delays (0, DT, 2*DT, ... (n-1)*DT) are respectively connected to the inputs of a multiplier (EXj).

3. Device according to Claim 2,
**characterized**
**in that** two delay lines (LZ1, LZ2) are provided, through which, in the region in which they exhibit a mutual assignment via the inputs of multipliers (EXj), said baseband signal (BB) runs in opposite directions, so that the delays (DT1, DT2) occurring between adjacent multipliers (EXk and EX(k+1); k = 1 ... n-1) are added to form a delay difference (DT = DT1 + DT2) between said multipliers.

4. Device according to Claim 2,
**characterized**
**in that** two delay lines (LZ1, LZ2) are provided, which, in the region in which they exhibit an assignment via the inputs of multipliers
(EXj), are traversed in the same direction, so that the delays (DT1, DT3) occurring between adjacent multipliers (EXk and EX(k+1); k = 1 ... n-1) are subtracted from one another to form a delay difference (DT = DT1 - DT3) between said multipliers.

5. Device according to Claim 1,
**characterized**
**in that** a plurality of delay lines (LZ1j, LZ2j; j = 1 ... n) of different lengths are provided, to whose ends (A1j, A2j; j = 1 ... n) the inputs of multipliers (EXj) are connected.

6. Device according to one of Claims 2 to 5,
**characterized**
**in that** a detour line (Um; m = 2 ... n) or a buffer amplifier (V1j, V2j; j = 1 ... n) is provided in a delay line (LZ1, LZ2, LZ1j, LZ2j; j = 1 ... n).

7. Device according to one of Claims 2 to 6,
**characterized**
**in that** delays (0, DT, 2*DT, ... (n-1)*DT) that occur are equidistant with a constant delay difference (DT).

8. Device according to one of Claims 2 to 7,
**characterized**
**in that** a delay difference (DT) is at least approximately equal to a symbol duration (T) of the baseband signal (BB).

9. Device according to one of the preceding claims,
**characterized**
**in that** provision is made of a regulator (R) for controlling a PMD compensator (PMDC).

10. Device according to Claim 9,
**characterized**
**in that** the regulator (R) at least approximately maximizes a non-delayed value (AKF1) of the autocorrelation function and adjusts values (AKF2, AKF3 ... AKFn) of the autocorrelation function that are delayed by at least one symbol duration (T) at least approximately to the value zero.

11. Device according to one of the preceding claims,
**characterized**
**in that** provision is made of a measuring arrangement (EG; DFF2; EXOR) for measuring the bit error rate in the event of an intentionally impaired reception signal or a changed threshold value of a second decision stage (DFF2), whose error signal (FS) controls a PMD compensator (PMDC) via a regulator (R).

12. Device according to Claim 11,
**characterized**
**in that** the regulator (R) is used additionally for adaptively setting the values of the autocorrelation function (AKFj; j = 1 ... n) that are to be sought.

13. Device according to one of the preceding claims,
**characterized**
**in that** the multiplier (EXj) is an EXOR gate or a Gilbert multiplier.

## Revendications

1. Dispositif pour détecter la dispersion de modes de polarisation d'un signal de données optique (OS) par évaluation d'un signal de bande de base électrique (BB),
**caractérisé en ce que**,
au moins un multiplicateur (EXj ;j = 1 ... n) est prévu, qui calcule une valeur (AKFj; j = 1 ... n) de la fonction d'autocorrélation (AKF) du signal de bande de base (BB) en multipliant une valeur du signal de bande de base (BB) par une valeur retardée du signal de bande de base et en faisant ensuite la moyenne dans un dispositif faisant la moyenne (LPj; j = 1 ... n).

2. Dispositif selon la revendication 1,
**caractérisé en ce que**,
une ligne de retard (LZ1, LZ2) avec des prises (A1j, A2j; j = 1 ... n) est prévue, **en ce que** des prises (A1j resp A2j) avec différents retards (0, DT, 2*DT, ... (n-1)*DT) sont raccordés à chaque fois aux entrées d'un multiplicateur (EXj).

3. Dispositif selon la revendication 2,
**caractérisé en ce que**,
deux lignes de retard (LZ1, LZ2) sont prévues, qui, dans la zone où elles présentent une association mutuelle par l'intermédiaire des entrées des multiplicateurs (EXj), sont parcourues par ce signal de bande de base (BB) dans des directions opposées de sorte que les retards (DT1, DT2) intervenant entre les multiplicateurs voisins (EXk et EX (k+1); k = 1 ... n-1) s'additionnent en obtenant une différence de retard (DT = DT1 + DT2) entre ces multiplicateurs.

4. Dispositif selon la revendication 2,
**caractérisé en ce que**,
deux lignes de retard (LZ1, LZ2) sont prévues qui, dans la zone où elles présentent une association par l'intermédiaire des entrées des multiplicateurs (EXj), sont parcourues dans la même direction, de sorte que les retards (DT1, DT3) intervenant entre des multiplicateurs voisins (EXk et EX (k+1); k = 1 ... n-1) se soustraient en obtenant une différence de retard (DT = DT1 - DT3) entre ces multiplicateurs.

5. Dispositif selon la revendication 1,
**caractérisé en ce que**,
plusieurs lignes de retard de longueurs différentes (LZ1j, LZ2j; j = 1 ...n) sont prévues, aux extrémités desquelles (A1j, A2j; j = 1 ... n) sont raccordées les entrées de multiplicateurs (EXj).

6. Dispositif selon l'une quelconque des revendications 2 à 5,
**caractérisé en ce que**,
une ligne détournée (Um; m = 2 n) ou un amplificateur tampon (V1j, V2j; j = 1 ...n) sont prévus dans une ligne de retard (LZ1, LZ2, LZ1j, LZ2j; j = 1 ...n).

7. Dispositif selon l'une quelconque des revendications 2 à 6,
**caractérisé en ce que**,
des retards qui interviennent (0, DT, 2*DT, (n-1)*DT) sont équidistants avec une différence de retard constante (DT).

8. Dispositif selon l'une quelconque des revendications 2 à 7,
**caractérisé en ce que**,
une différence de retard (DT) est au moins approximativement égale à une durée de symbole (T) du signal de bande de base (BB).

9. Dispositif selon l'une quelconque des revendications précédentes,
**caractérisé en ce que**,
un régulateur R est prévu pour commander un compensateur de PMD (PMDC).

10. Dispositif selon la revendication 9,
**caractérisé en ce que**,
le régulateur (R) maximalise au moins approximativement une valeur non retardée (AKF1) de la fonction d'autocorrélation, et règle au moins des valeurs retardées (AKF2, AKF3, ... AKFn) de la fonction d'autocorrélation, retardées d'au moins une durée de symbole (T), au moins approximativement sur la valeur zéro

11. Dispositif selon l'une quelconque des revendications précédentes,
**caractérisé en ce que**,
une configuration de mesure (EG; DFF2; EXOR) est prévue pour mesurer le taux d'erreur de bit dans un signal de réception visiblement détérioré ou une valeur de seuil modifiée d'un deuxième étage de circuit de décision (DFF2), dont le signal d'erreur (FS) commande un compensateur de PMD (PMDC) par l'intermédiaire d'un régulateur (R)

12. Dispositif selon la revendication 11,
**caractérisé en ce que**,
en outre, les valeurs que l'on cherche à obtenir de la fonction d'autocorrélation (AKFj; j = 1 ... n), sont réglées de façon adaptive par le régulateur (R).

13. Dispositif selon l'une quelconque des revendications précédentes,
**caractérisé en ce que**,
le multiplicateur (EXj) est une porte OU exclusif ou un multiplicateur de Gilbert.
